# FASCICULE DE BREVET EUROPEEN

(11) **EP 1 415 363 B1**
(45) Date de publication et mention de la délivrance du brevet: **24.11.2004**
(21) Numéro de dépôt: 02764967.2
(22) Date de dépôt: 10.07.2002
(51) Int. Cl.: H01M 8/04, H01M 8/02

(54) **PILE A COMBUSTIBLE A GESTION THERMIQUE OPTIMISEE**
BRENNSTOFFZELLE MIT OPTIMIERTER THERMISCHEN VERWALTUNG
OPTIMIZED THERMAL MANAGEMENT FUEL CELL

(30) Priorité: 12.07.2001 FR 0109301
(43) Date de publication de la demande: 06.05.2004
(73) Titulaire: COMMISSARIAT A L'ENERGIE ATOMIQUE, 75752 Paris Cédex 15 (FR)
(72) Inventeur: LAURENT, Jean-Yves, 38640 CLAIX (FR); MARSACQ, Didier, F-38000 GRENOBLE (FR); TERNAY, Francis, F-38240 MEYLAN (FR); DE CRECY, François, F-38180 SEYSSINS (FR)
(74) Mandataire: Poulin, Gérard
(86) Numéro de dépôt international: PCT/FR2002/002420
(87) Numéro de publication internationale: WO 2003/007409

(56) Documents cités:
- EP-A- 0 814 528
- PATENT ABSTRACTS OF JAPAN vol. 009, no. 169 (E-328), 13 juillet 1985 (1985-07-13) -& JP 60 041769 A (HITACHI SEISAKUSHO KK), 5 mars 1985 (1985-03-05)
- PATENT ABSTRACTS OF JAPAN vol. 2000, no. 11, 3 janvier 2001 (2001-01-03) -& JP 2000 226681 A (FURUYA CHOICHI;TOAGOSEI CO LTD; MITSUI CHEMICALS INC; KANEGAFUCHI CHEM), 15 août 2000 (2000-08-15)
- PATENT ABSTRACTS OF JAPAN vol. 010, no. 221 (E-424), 2 août 1986 (1986-08-02) -& JP 61 058173 A (SHIN KOBE ELECTRIC MACH CO LTD), 25 mars 1986 (1986-03-25)
- PATENT ABSTRACTS OF JAPAN vol. 010, no. 217 (E-423), 29 juillet 1986 (1986-07-29) -& JP 61 055870 A (SHIN KOBE ELECTRIC MACH CO LTD), 20 mars 1986 (1986-03-20)

## Description

On traite ici d'une pile à combustible.

Les piles à combustible sont le siège d'une réaction chimique créatrice d'énergie électrique entre un combustible et un oxydant. La réaction s'effectue dans des assemblages comprenant normalement une paire d'électrodes et un électrolyte solide intermédiaire, et elle s'accompagne d'un dégagement de chaleur important qu'il convient de réguler. C'est pourquoi les piles comprennent normalement des dissipateurs de chaleur reliés aux assemblages par des connecteurs thermiques. L'échauffement excessif des assemblages est ainsi prévenu. Il apparaît toutefois que le rendement des piles est faible à froid et que la durée de stabilisation en température est longue.

Les piles connues de puissance moyenne (quelques kilowatts) ont parfois un système de refroidissement autonome et réglable, qui n'est cependant guère envisageable pour les piles de petite puissance (quelques watts) qui suscitent aujourd'hui un intérêt plus vif et pour lesquelles ce problème de performance réduite à froid est plus aigu puisque leur fonctionnement est souvent plus discontinu. Le brevet 5 759 712 des Etats-Unis, qui décrit longuement les piles à combustible, mentionne d'assurer l'évacuation de la chaleur par des membranes perméables à l'eau, sans suggérer qu'il s'agisse d'un progrès.

Le sujet de cette invention est donc une pile à combustible améliorée qui présente la particularité que les connecteurs thermiques sont des alliages à mémoire de forme ayant deux états principaux : un état chaud où ils assurent normalement le rôle de liaison thermique entre les assemblages et les dissipateurs, et un état froid où cette connexion thermique est réduite ou interrompue. Une telle commutation de conductivité entre deux états assure un chauffage rapide de la pile jusqu'à la température de service, puis une dissipation normale, sans que l'opérateur ait à intervenir.

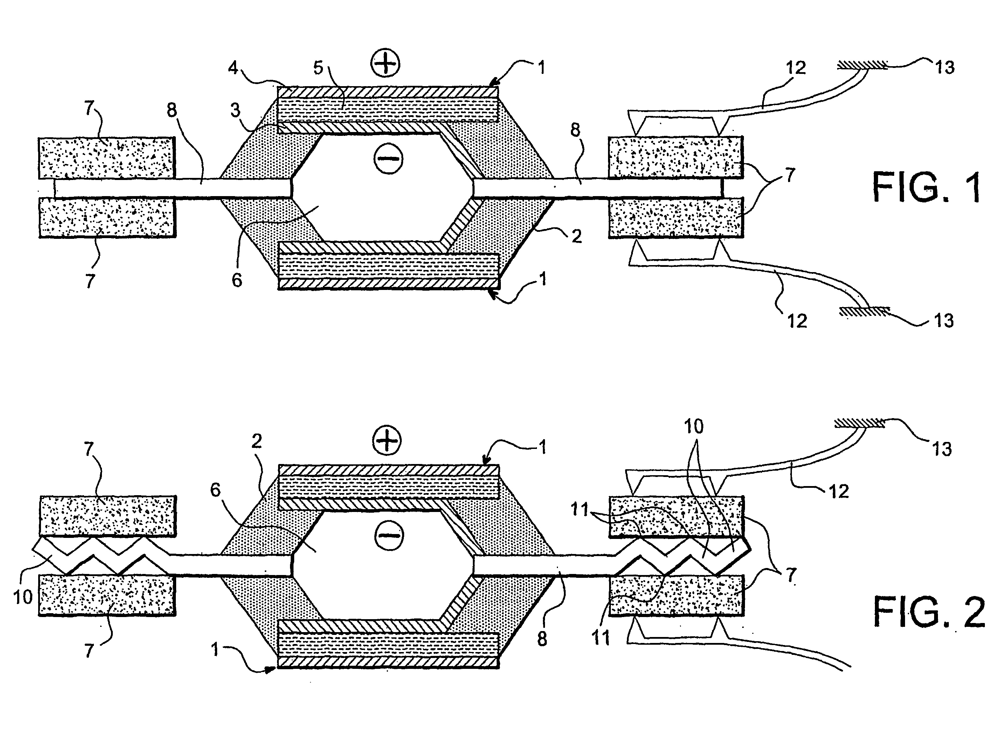

Plusieurs modes de réalisation particuliers, proposés pour matérialiser cette conception, seront décrits à l'aide des figures 1 et 2.

La pile de la figure 1, qui n'est représentée que par des parties principales, comprend des assemblages 1 disposés sur un support 2 et comprenant chacun une anode 3, une cathode 4 et une membrane d'électrolyte solide 5 entre l'anode 3 et la cathode 4. Le support 2 (en silicium, en plastique, en céramique, .....) est un conduit à section polygonale qui enclôt un canal 6 de combustible. Selon les applications, ce canal peut prendre différentes formes comme par exemple une chambre. On trouve en fait deux assemblages 1 situés chacun sur des faces opposées d'une section du support 2. D'autres paires semblables d'assemblages 1 peuvent être disposées ailleurs sur le support 2. Le combustible dans le canal 6 s'ionise sur les assemblages 1 et réagit avec des ions provenant d'un milieu oxydant ambiant. Cette réaction chimique de combinaison produit un courant électrique dans un circuit non représenté joignant l'anode 3 à la cathode 4, et la chaleur produite par cette réaction s'écoule dans le support 2. La chaleur à dissiper aboutit à des radiateurs 7 de chaleur ayant une grande surface d'échange avec le milieu ambiant et reliés au support 2 par des barrettes 8. Dans la réalisation représentée, les barrettes 8 sont au nombre de deux et sont encastrées par une extrémité dans le support 2 entre les deux assemblages 1, et leurs extrémités opposées sont engagées entre une paire de radiateurs 7. Les barrettes 8 pointent dans des sens opposés à partir du support 2, qui est donc situé entre les paires de radiateurs 7.

Les barrettes 8 servant de connecteurs thermiques sont construites en un alliage à mémoire de forme dans l'invention. Ces alliages, dont plusieurs compositions sont maintenant bien connues du public spécialisé, présentent la propriété de changer de structure cristalline au-delà d'une température de transition, et passant naturellement d'une structure martensitique à une structure austénitique quand on les échauffe. La température de transition dépend de la composition de l'alliage et peut en pratique être choisie presque à volonté. La conductivité thermique de ces alliages est souvent bien supérieure, du double par exemple, à l'état austénitique qu'au martensitique. Leur propriété plus connue est cependant qu'ils peuvent se déformer en changeant d'état : s'ils ont été déformés plastiquement à l'état austénitique, ils reprennent leur forme initiale en revenant à l'état martensitique mais retournent à la forme issue de la déformation en revenant à l'état austénitique. Le changement de forme est réversible pour un grand nombre de transitions de température.

On peut exploiter ces propriétés comme ceci pour les besoins de l'invention. La barrette 8 est plane à l'état chaud que représente la figure 1 et se trouve comprimée entre les paires de radiateurs 7 en s'appuyant sur des surfaces entières d'elle. L'état froid de la barrette 8 est représenté à la figure 2 : on voit que la forme plane est remplacée par des ondulations 10 entre les paires de radiateurs 7, de sorte que la liaison avec eux ne se fait plus que par des arêtes 11 de celles-là : elle est donc réduite, ce qu'on apprécie puisqu'on est alors dans un état froid de la pile et que la chaleur produite par le début de son fonctionnement demeure plus longuement dans le support 2 et contribue à chauffer les assemblages 1 pour leur faire atteindre plus rapidement leur température de service, où leur efficacité est la plus grande. Quand cet état de pile chaude est atteint, la température de transition des barrettes 8 a été dépassée et elles ont repris leur forme plane qui leur permet de transmettre avec un plus grand débit la chaleur aux radiateurs 7 et à l'extérieur, ce qui stabilise la température de la pile. Des ressorts 12 encastrés dans des points fixes 13 de la pile pèsent sur les radiateurs 7 et les maintiennent contre la barrette 8 même quand elle reprend sa forme plane.

On peut remarquer qu'il n'est pas nécessaire de recourir au changement de forme offert par ces alliages puisque leur conductivité thermique varie aussi à la transition des deux structures cristallines : comme cette conductivité est plus grande pour l'état chaud, la stabilisation de température peut déjà être exercée sans recourir à une variation de surface de contact avec les radiateurs 7. Le dispositif pourrait alors prendre immuablement l'aspect de la figure 1, bien qu'il devienne alors possible de supprimer les ressorts 12 et de coller les dissipateurs thermiques sur les barrettes 8.

La déformation aux ondulations 10 ou à une forme similaire est appréciable puisqu'elle ne s'accompagne pas de grands déplacements. Elle permet aussi d'appliquer un radiateur 7 de chaque côté de la barrette 8 et d'interrompre pour l'essentiel la connexion matérielle et thermique avec chacun d'eux. Cette dualité des radiateurs 7, jointe à la meilleure conductivité de l'alliage au-dessus de la température de transition, assure une grande capacité d'évacuation de la chaleur à l'état chaud de la pile.

Dans tous ces modes de réalisation, le radiateur 7 n'est pas indispensable et pourrait être remplacé par n'importe quel dissipateur. L'extrémité libre du dispositif de transport de chaleur pourrait même, dans certaines situations, rester dégagée et répandre la chaleur captée directement dans la source froide qui l'environne.

## Revendications

1. Pile à combustible comprenant au moins un assemblage (1) d'oxydation du combustible et un connecteur thermique reliant l'assemblage à une source froide, **caractérisée en ce que** le connecteur thermique comprend une barrette (8) en alliage à mémoire de forme qui comporte un état chaud où il possède une conductivité thermique élevée et un état froid où il présente une conductivité thermique faible.

2. Pile à combustible selon la revendication 1, **caractérisée en ce que** le connecteur thermique présente un radiateur (7) à un bout placé dans la source froide.

3. Pile à combustible selon la revendication 2, **caractérisée en ce que** la barrette est en contact par une surface avec le radiateur à l'état chaud et en contact par une ou plusieurs arêtes avec le radiateur à l'état froid.

4. Pile à combustible selon la revendication 3, **caractérisée en ce que** la barrette (8) est plane à l'état chaud et ondulée à l'état froid là où le radiateur (7) est en contact avec elle.

5. Pile à combustible selon l'une quelconque des revendications 3 ou 4, **caractérisée en ce qu'**un ressort (12) pousse le radiateur vers la barrette.

6. Pile à combustible selon l'une quelconque des revendications précédentes, **caractérisée en ce que** le connecteur thermique présente une paire de radiateurs (7) des deux côtés de la barrette (8).

7. Pile à combustible selon l'une quelconque des revendications précédentes, **caractérisée en ce que** le connecteur thermique est encastré à un bout dans un support (2) de l'assemblage (1).

8. Pile à combustible selon l'une quelconque des revendications 1 à 7, **caractérisée en ce qu'**elle comprend deux assemblages (1) disposés à des faces opposées d'un canal (6) du combustible et deux connecteurs thermiques encastrés dans le canal entre lesdites faces opposées.

## Patentansprüche

1. Brennstoffzelle mit wenigstens einem Brennstoffoxidations-Block (1) und einer Thermoverbindungseinrichtung, die den Block mit einer kalten Quelle verbindet,
**dadurch gekennzeichnet,**
**dass** die Thermoverbindungseinrichtung einen Stab (8) aus Formgedächtnislegierung umfasst, der in einem warmen Zustand eine hohe Wärmeleitfähigkeit besitzt und in einem kalten Zustand eine niedrige Wärmeleitfähigkeit besitzt.

2. Brennstoffzelle nach Anspruch 1, **dadurch gekennzeichnet, dass** die Thermoverbindungseinrichtung an einem in der kalten Quelle befindlichen Ende einen Radiator (7) aufweist.

3. Brennstoffzelle nach Anspruch 2, **dadurch gekennzeichnet, dass** der Stab im warmen Zustand mittels einer Fläche Kontakt hat mit dem Radiator und im kalten Zustand mittels einer oder mehrerer Kanten Kontakt hat mit dem Radiator.

4. Brennstoffzelle nach Anspruch 3, **dadurch gekennzeichnet, dass** der Stab (8) im warmen Zustand flach bzw. flächig ist und im kalten Zustand, dort wo er mit dem Radiator (7) Kontakt hat, wellig ist.

5. Brennstoffzelle nach einem der Ansprüche 3 oder 4, **dadurch gekennzeichnet, dass** eine Feder (12) den Radiator gegen den Stab drückt.

6. Brennstoffzelle nach einem der vorangehenden Ansprüche, **dadurch gekennzeichnet, dass** die Thermoverbindungseinrichtung ein beiderseits des Stabs (8) angeordnetes Paar Radiatoren (7) umfasst.

7. Brennstoffzelle nach einem der vorangehenden Ansprüche, **dadurch gekennzeichnet, dass** die Thermoverbindungseinrichtung mit einem Ende in einen Träger (2) des Blocks (1) eingebaut sind.

8. Brennstoffzelle nach einem der Ansprüche 1 bis 7, **dadurch gekennzeichnet, dass** sie zwei auf entgegengesetzten Seiten des Brennstoffkanals (6) angeordnete Blöcke (1) umfasst und zwei Thermoverbindungseinrichtungen, die zwischen den genannten entgegengesetzten Seiten in den Kanal eingebaut sind.

## Claims

1. Fuel cell comprising at least an oxidising agent assembly (1) of the fuel and a thermal connector connecting the assembly to a cold source, **characterised in that** the thermal connector comprises a connecting strip (8) in shape memory alloy which composes a hot state where it has a high thermal conductivity and a cold state where it has a low thermal conductivity.

2. Fuel cell according to claim 1, **characterised in that** the thermal connector has a radiator (7) at one end placed in the cold source.

3. Fuel cell according to claim 2, **characterised in that** the connecting strip is in contact via a surface with the radiator in the hot state and in contact via one or several edges with the radiator in the cold state.

4. Fuel cell according to claim 3, **characterised in that** the connecting strip (8) is flat in the hot state and rippled in the cold state where the radiator (7) is in contact with it.

5. Fuel cell according to any of claims 3 or 4, **characterised in that** a spring (12) pushes the radiator towards the connecting strip.

6. Fuel cell according to any one of the previous claims, **characterised in that** the thermal connector has a pair of radiators (7) on both sides of the connecting strip (8).

7. Fuel cell according to any one of the previous claims, **characterised in that** the thermal connector is embedded at one end into a support (2) of the assembly (1).

8. Fuel cell according to any one of claims 1 to 7, **characterised in that** it comprises two assemblies (1) located on opposite sides of a fuel channel (6) and two thermal connectors embedded into the channel between the said opposite sides.
